# EUROPÄISCHE PATENTSCHRIFT

(11) **EP 2 740 582 B1**
(45) Veröffentlichungstag und Bekanntmachung des Hinweises auf die Patenterteilung: **04.03.2015**
(21) Anmeldenummer: 13195938.9
(22) Anmeldetag: 05.12.2013
(51) Int. Cl.: B29C 49/56, B29C 49/36, B29C 49/06

(54) **Blasformmaschine und Blasformverfahren.**
Blow moulding machine and related method.
Machine de formage par soufflage et procédé apparenté.

(30) Priorität: 05.12.2012 DE 102012023703
(43) Veröffentlichungstag der Anmeldung: 11.06.2014
(73) Patentinhaber: Krones AG, 93073 Neutraubling (DE)
(72) Erfinder: Philipp, Thomas, 93073 Neutraubling (DE); Spitzer, Thomas, 93073 Neutraubling (DE); Geltinger, Florian, 93073 Neutraubling (DE); Höllriegl, Thomas, 93073 Neutraubling (DE)
(74) Vertreter: Bittner, Bernhard

(56) Entgegenhaltungen:
- EP-A1- 1 535 719
- EP-A1- 2 495 086
- EP-A2- 2 522 484
- DE-A1-102008 010 885
- US-A1- 2011 236 525

## Beschreibung

Die vorliegende Erfindung bezieht sich auf eine Vorrichtung zum Umformen von Kunststoff- oder Glasvorformlingen zu Kunststoffbehältnissen. Derartige Maschinen sind aus dem Stand der Technik bekannt. Üblicherweise weisen derartige Maschinen einen drehbaren Träger auf, an dem eine Vielzahl von Blasstationen angeordnet ist. Diese Blasstationen oder Umformungsstationen weisen dabei jeweils Formteile auf, die geschlossen werden können, um so einen Hohlraum auszubilden, innerhalb dessen die Kunststoff- oder Glasvorformlinge insbesondere durch Beaufschlagung mit Druckluft zu den Kunststoffbehältnissen expandiert werden. Dabei sind üblicherweise Führungskurven vorgesehen, welche, wie beispielsweise in der DE 10 2008 010 885 A1 beschrieben, die beiden Formteile während der Blasformung des Behälters führen, die beiden Formteile miteinander verschließen, verriegeln oder wieder öffnen. Auch sind aus dem Stand der Technik Verriegelungsmechanismen (teilweise mit separaten Führungskurven) bekannt, welche die Blasform in einem geschlossenen Zustand verriegeln, was hilfreich ist, da im Inneren der Blasform sehr hohe Drücke entstehen. So zeigen beispielsweise die Anmeldungen EP 1 535 719 A1 und EP 2 495 086 A1 Verriegelungsmechanismen, die aus einem an einem Formteil bewegbar angeordneten ersten Verriegelungselement und einem an einem weiteren Formteil angeordneten zweiten Verriegelungselement bestehen. Dabei kann das erste Verriegelungselement zum Verriegeln ein Verriegelungsprofil aufweisen, das angepasst an ein Gegenprofil des zweiten Verriegelungselements ausgebildet ist. Durch den Einsatz einer Verriegelung kann die Kurve, welche für das Öffnen und Schließen verantwortlich ist, kurz (im Bereich, wo sich der Formträger zur Entnahme der Flasche und zur Eingabe eines Vorformlings befindet) gehalten werden, da die Verriegelung die Formträgerhälften auf dem Rest des Umlaufs des Blasrads selbstständig zuhält. Die Blasmaschinen, bei welchen die Verriegelung durch einen separaten Mechanismus betätigt wird, weisen meist zwei voneinander getrennte Verriegelungenskurvensegmente auf. Eines (Entriegelungskurvensegment) liegt in Laufrichtung des Blasrads gesehen, im Bereich kurz vor der Kurve zum Öffnen der Blasformteile. Eines liegt im Bereich kurz nach der Kurve zum Schließen der Blasformteile. Dazwischen ist keine Kurve vorgesehen, die mit der Verriegelung zusammenwirkt. Der an der Verriegelung sitzende Kurvenfolger (üblicherweise eine Stahlrolle) muss also pro Umlauf des Blasrads zweimal von einer Kurve beschleunigt werden. Zudem sind die Kurvenfolger teilweise ändernden Drehrichtungen ausgesetzt bzw. es müssen zwei Kurvenrollen pro Verriegelung vorgesehen werden, um einen Drehrichtungswechsel zu vermeiden. Die Kurvensegmente der Verriegelung sind teilweise aus sicherheitstechnischen Gründen auslenkbar gestaltet - kann aufgrund einer Klemmung keine Verriegelung vorgenommen werden, so muss die Kurve aufgrund von zu hoher Belastung ausschwenken, um eine Beschädigung der Verriegelung zu vermeiden.

Diese Vorgehensweisen haben sich bewährt, sind jedoch teilweise technisch relativ aufwendig oder verschleißtechnisch ungünstig.

Der vorliegenden Erfindung liegt daher die Aufgabe zu Grunde, eine Vorrichtung zum Umformen von Kunststoff- oder Glasvorformlingen zu Kunststoff- oder Glasbehältnissen zur Verfügung zu stellen, welche im Vergleich zu Vorrichtungen aus dem Stand der Technik technisch einfacher und bevorzugt auch kostengünstiger, verschleißärmer und sicherer aufgebaut ist. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist einen umlaufenden Träger auf, an dem eine Vielzahl von Umformungsstationen zum Umformen von Kunststoffvorformlingen zu Kunststoffbehältnissen angeordnet ist. Dabei weisen diese Umformungsstationen jeweils bezüglich einander bewegliche Blasformträgerteile zum Öffnen und Schließen der Umformungsstationen auf und die Umformungsstationen weisen einen Verriegelungsmechanismus auf, um die Umformungsstationen in einem geschlossenen Zustand zu halten. Weiterhin ist ein Öffnungs- und Schließmechanismus vorhanden, um die Umformungsstationen zu öffnen und zu schließen.

Erfindungsgemäß weist der Verriegelungsmechanismus eine Verriegelungsskurve auf, der gegenüber sich die Umformungsstationen zumindest teilweise bewegen, wobei sich diese Verriegelungsskurve, in Bewegungsrichtung des Trägers gesehen, durchgängig zwischen einer Position erstreckt, in der die Blasformträgerteile geöffnet werden (insbesondere ab Beginn des Öffnungsvorgangs) und einer Position, in der die Blasformträgerteile geschlossen werden (insbesondere bis zumindest in die Position, in der ein Formschluss der Verriegelung hergestellt werden kann und insbesondere bis zum Ende des Schließvorgangs) und dass die Blasformträgerteile zumindest entlang eines weiteren Teilabschnitts des Umlaufs durch eine an den Blasformträgerteilen angeordnete Verriegelung selbstständig im geschlossenen Zustand gehalten werden.

Der weitere Teilabschnitt ist insbesondere der, in dem das Recken und/oder die Expansion des Vorformlings mit Druckluft erfolgt. Dieser Teilabschnitt kann sich beispielsweise in einem Bereich von 120° bis 240° des Umlaufs des Blasrades befinden.

Die Anfangsposition der Verriegelungskurve beim Öffnen kann alternativ auch so angegeben werden, dass es sich um die Position handelt, in der ein Form- oder Kraftschluss der Verriegelung aufgehoben wird, damit die Blasformträgerteile geöffnet werden können. Gleiches gilt für die Endposition der Verriegelungskurve: hier wird ein Form- oder Kraftschluss bei oder nach einem Schließen der Blasformträgerteile wieder hergestellt. Insbesondere wird zwischen den beiden Positionen im Normalbetrieb ein Behälter ausgebracht und ein neuer Vorformling eingebracht.

Selbstständig bedeutet, dass der Verriegelungsmechanismus derart arbeitet, dass durch eine Verriegelungskurve ein Verriegelungselement beispielsweise eingehakt wird, und dieser Sperrzustand während des Blasvorgangs aufrechterhalten wird, und zwar ohne weitere Einwirkung einer Führungskurve auf die Verriegelung. In anderen Worten sorgt die Umformungsstation in dem Teilabschnitt selbst dafür, dass sie verriegelt bleibt, indem sie ausschließlich durch an ihr angeordnete Elemente den Verriegelungszustand beibehält - der Bereich des Teilabschnitts ist sozusagen verriegelungskurvenfrei.

0° als Referenzpunkt bezieht sich in dieser Schrift auf den Punkt entlang des Umlaufs eines Blasrades (umlaufender Träger), welcher genau in der Mitte zwischen einer Vorrichtung zur Behälterausgabe aus der Umformungsstation (insbesondere ein Auslaufstern, welcher fertig geblasene Behälter aus den Umformungsstationen entnimmt) und einer Vorrichtung zum Einbringen von Vorformlingen in die Umformungsstation (insbesondere ein Einlaufstern, welcher Vorformen in die Umformungsstationen eingibt), liegt. Üblicherweise befindet sich 0° auch in etwa bei der maximalen Öffnungsposition der Formträger. Sollten die Vorformlinge und die Behälter mit derselben Vorrichtung ein- und ausgebracht werden, so ist die Mitte dieser Vorrichtung 0°. Da die Erfindung auch bei nicht kreisförmig umlaufenden Blasformmaschinen einsetzbar ist, soll 0° bei diesen Maschinen als die Position zwischen einem Anfang eines Öffnens und einem Ende eines Schließens der Umformungsstationen liegen. Zur Umrechnung würde dann 180° der Hälfte des zurückgelegten Weges eines Umlaufs entsprechen.

Die Position, in der die Blasformteile entriegelt werden, ist üblicherweise zwischen ca. 270° bis ca. 355°, geöffnet werden sie ab ca. 0,1° bis 10° später (Anfang Öffnungsbewegung), die Entnahme der Behälter erfolgt zwischen 2° und 50° nach Beginn der Öffnungsbewegung. Die Position, in der die Formträgerhälften endgültig geschlossen werden, ist bevorzugt zwischen 5° und 90°, die des Abschlusses der Verriegelung zwischen 0° bis 10° nach dem Ende des Schließvorgangs. Die Position zur Eingabe eines neuen Preforms ist ebenfalls zwischen 5° und 90°. Die Werte können je nach Maschine sehr stark variieren.

Die Verriegelungskurve erstreckt sich insbesondere über einen Winkel, welcher größer ist als der Winkelbereich, in dem die Umformungsstation geöffnet ist.

Insbesondere findet ein Öffnen der Blasformteile über mindestens 5° statt. Insbesondere findet auch ein Schließen der Blasformteile über mindestens 5° statt.

Insbesondere ist mindestens ein Drittel der Verriegelungskurve in einem Bereich entlang des Umfangs des Trägers angeordnet, in dem die Blasformteile geöffnet werden und mindestens ein weiteres Drittel in einem Bereich, in dem die Blasformteile geschlossen werden.

Die Verriegelungskurve soll im Folgenden so verstanden werden, dass sie neben dem Verriegeln auch für die Entriegelung der Formträgerteile verantwortlich ist.

Vorteilhaft handelt es sich bei der Vorrichtung zum Umformen von Kunststoffbehältnissen um eine Blasmaschine und besonders bevorzugt um eine Streckblasmaschine. Dies bedeutet, dass die Kunststoffvorformlinge durch Beaufschlagung mit Druckluft zu den Kunststoffbehältnissen expandiert werden. Bei einer weiteren vorteilhaften Ausführungsform weisen die Umformungsstationen jeweils Reckstangen auf, welche die Kunststoffvorformlinge in ihrer Längsrichtung dehnen, und Blasdüsen, durch welche Druckluft in die Vorformlinge eingebracht werden kann.

Bei einer weiteren vorteilhaften Ausführungsform handelt es sich bei den bezüglich einander bewegbaren Blasformträgerteilen um schwenkbare Seitenteile. Vorteilhaft erstreckt sich dabei eine Schwenkachse, bezüglich derer wenigstens ein Seitenteil und bevorzugt beide Seitenteile schwenkbar sind, in einer vertikalen, also lotrechten Richtung. Es wäre aber auch denkbar, die Blasformteile linear öffenbar zu gestalten. Ein Seitenteil könnte auch feststehend in Bezug auf das Blasrad sein, das andere beweglich. Es könnten auch drei oder vier Blasformträgerteile einer Umformungsstation zugeorndet sein -je nachdem, wie viel Hinterschnitte bei der Entformung der Behälter vorhanden sind. Die Formträger können sich auch im Winkel asynchron öffnen, bzw. sich auch unterschiedlich weit und/oder mit unterschiedlichen Endwinkeln öffnen. Dies hat in vielen Fällen Vorteile, was die Ausführbarkeit von Behältern mit Transportsternen angeht.

Bei einer weiteren vorteilhaften Ausführungsform weisen die Umformungsstationen zusätzlich wenigstens Bodenteile auf, welche eine Blasform auch von unten her verschließen.

Insbesondere ist der Träger als ein im Wesentlichen runder Maschinentisch (Blasrad) ausgebildet und läuft um eine lotrechte Achse herum, wobei beide Blasformträgerteile der Umformungsstationen an einer am Maschinentisch angeordneten, lotrechten und insbesondere gemeinsamen Achse schwenkbar gelagert sind und das bewegbare Verriegelungselement ebenfalls um eine lotrechte Achse geschwenkt werden kann. Diese Verriegelungsachse ist insbesondere im verriegelten Zustand der Blasformträgerteile weiter von der Maschinentischachse beabstandet als die Achse oder die Achsen beider Blasformträgerteile.

Die Vorrichtung weist insbesondere eine Öffnungs- und Schließkurve (im Folgenden Hauptkurve genannt) auf, welche ein Öffnen und Schließen der Umformungsstation bewirkt. Der Öffnungs- und Schließmechanismus weist einen Kurvenfolger auf, welcher mit der Hauptkurve bei Bewegung des Trägers zusammenwirkt. Die Hauptkurve ist insbesondere stationär im Vergleich zum umlaufenden Blasrad. Sie befindet sich vorzugsweise radial innerhalb des Teilkreises, in dem die Vorformlinge bzw. Behälter transportiert werden, sozusagen hinter den Umformungsstationen.

Insbesondere weist der Verriegelungsmechanismus einen Kurvenfolger auf, welcher mit der Verriegelungskurve bei Bewegung des Trägers zusammenwirkt. Die Verriegelungskurve ist insbesondere stationär im Vergleich zum umlaufenden Blasrad und den Formträgern angeordnet. Sie befindet sich vorzugsweise radial außerhalb des Teilkreises, in dem die Vorformlinge bzw. Behälter von der Umformungsstation transportiert werden, sozusagen vor den Umformungsstationen - betrachtet von einer Position radial außerhalb der Maschine und aus einem Winkel, bei welchem die Kurve an der Maschine angeordnet ist, beispielsweise 0°. Somit weist der Kurvenverlauf der Verriegelungskurve im Mittel einen größeren Durchmesser auf als der der Hauptkurve.

Es kann aber auch eine Anordnung der Kurven gewählt werden, bei der der mittlere Durchmesser der Verriegelungskurve kleiner ist als der der Hauptkurve. Somit läge sie radial innerhalb der Hauptkurve.

Insbesondere ist die Verriegelungskurve bei einer um eine lotrechte Achse drehenden Maschine höher angeordnet als die Hauptkurve. Beide Kurven sind jedoch bevorzugt unterhalb der Behältertransportebene angeordnet, was einen Aufbau der Kurven am Maschinengestell mit geringer Höhe begünstigt. Die Verriegelungskurve befindet sich insbesondere auf einer Höhe, welche ungefähr der Höhe des unteren Endes der Blasformträgerteile entspricht. Genauer gesagt liegt sie auf jeden Fall noch knapp unter einer Höhe, in der ein Boden eines abzutransportierenden Behälters am tiefsten liegen kann (abhängig von Behälterhöhe, die Transporthöhe der oberen Behältermündung, bzw. eines Tragrings ist bevorzugt immer gleich). Auf diese Weise können fertig geblasene Behälter oberhalb von ihr noch abtransportiert werden und der Abstand zur Verriegelung ist in lotrechter Richtung relativ gering (weniger Hebelarm, somit weniger Kraft auf die Verriegelung). Der Abstand der Verriegelungskurve zum tiefsten abzutransportierenden Behälter im Bereich des Abtransports liegt im Bereich von 500 mm bis 1 mm, bevorzugt im Bereich von 100 mm bis 1 mm.

Es kann aber auch eine Anordnung der Kurven gewählt werden, bei der die Verriegelungskurve oberhalb einer Behältertransportebene angeordnet ist.

Insbesondere ist die Position des dem Verriegelungsmechanismus zugeordneten Kurvenfolgers relativ zum Träger durch den Öffnungs- und Schließmechanismus veränderbar. Dieser Kurvenfolger folgt also der Öffnungsbewegung der Formträger.

Die Verriegelungskurve weist insbesondere einen Kurvenverlauf auf, welcher, in Bewegungsrichtung des Trägers gesehen, nach einem Entriegelungsabschnitt und vor einem Verriegelungsabschnitt, die von der Öffnungs- und/oder Schließbewegung der Blasformträgerteile abhängigen Positionsveränderung des dem Verriegelungsmechanismus zugeordneten Kurvenfolgers derart ausgleicht, dass dieser Kurvenfolger in diesem Bereich ständig an der Verriegelungskurve anliegt. Dies hat den Vorteil, dass der Verschleiß erheblich reduziert werden kann, da auf diese Weise ein beispielsweise als eine Rolle ausgebildeter Kurvenfolger pro Umlauf nur einmal beschleunigt werden muss.

Diese Maßnahme begünstigt u.a. auch die Verwendung von Kunststoffrollen als Kurvenfolger für die Betätigung der Verriegelung. Durch den Einsatz von Kunststoffrollen kann auch im Vergleich zu Stahlrollen auf ein Härten und auf eine Schmierung der Verriegelungskurve verzichtet werden. Insbesondere die Anlaufsegmente der Kurve können beispielsweise aus normalem Stahl oder Edelstahl hergestellt werden. Je nach Ausstoßleistung und Belastung ist es jedoch auch möglich, dass trotzdem Rollen mit einem Stahlmantel verwendet werden müssen.

Bei einer weiteren vorteilhaften Ausführungsform weist die Verriegelung einen Kraftspeicher auf. Sie wird von diesem ständig in die Verriegelungsposition gedrängt (gedreht, gedrückt oder gezogen). Beim Passieren der Verriegelungskurve wird der Kraftspeicher über den Kurvenfolger in Spannrichtung gespannt. Am Ende des Entriegelungsvorgangs ist er soweit gespannt, dass ein von der Verriegelung erzeugter Formschluss aufgehoben ist und die Blasformträgerhälften geöffnet werden können. Der Kraftspeicher ist insbesondere eine Torsionsfeder, kann aber auch - je nach Anordnung - eine Druck- oder Zugfeder oder eine pneumatische Feder sein.

Der Kraftspeicher wird in der Öffnungsposition entlang des insbesondere kompletten Verriegelungskurvenbereichs bevorzugt mehr belastet als in der Verriegelungsposition im verriegelungskurvenfreien Bereich. Es wäre auch denkbar, dass der Speicher eine Maximalbelastung erfährt, wenn der Formschluss aufgehoben und wieder hergestellt wird und dazwischen nur eine mittlere bis geringe Belastung erfährt, bevorzugt aber noch so viel, dass der Kurvenfolger an der Verriegelungskurve anliegen bleibt und/oder mitrollt.

Bevorzugt weist der Verriegelungsmechanismus ein an dem einen ersten Blasformträgerteil angeordnetes erstes Element und ein an einem zweiten anderen Blasformträgerteil angeordnetes zweites Element auf, wobei diese zwei Elemente formschlüssig zur Verriegelung der Blasformträger miteinander zusammenwirken. Insbesondere ist ein Element in Relation zu dem zu diesem Element zugeordneten Blasformträgerteil beweglich angeordnet. An diesem Element ist, insbesondere unmittelbar, ein Kurvenfolger angeordnet. Es könnten auch beide Elemente bewegbar sein, insbesondere in entgegengesetzter Richtung. Insbesondere ist das bewegbare Element um eine Achse schwenkbar gelagert und es befindet sich auf einer Seite der Achse der Kurvenfolger und auf der anderen Seite der Achse ein im Formschluss der Verriegelung befindliche Teil des Elements. Bei den Verriegelungselementen handelt es sich bevorzugt um Haken, die ineinander eingreifen. Die direkte Anordnung des Kurvenfolgers am bewegten Element ist sehr kostengünstig.

Das bewegbare Element wirkt bevorzugt über den genannten Kraftspeicher mit dem zu diesem Element zugeordneten Blasformträgerteil zusammen und wird von dem Kraftspeicher ständig in eine Verrieglungsposition gedrängt.

Insbesondere kann an dem bewegbaren Element ein Handhebel angeordnet sein, über den der Kraftspeicher derart spannbar ist, dass der Formschluss der Verriegelungselemente manuell aufgehoben und die Blasformträgerteile geöffnet werden können, beispielsweise zu einem Blasformwechsel oder zu Montagezwecken. Dies geschieht meistens in einem Wechselmodus (ohne laufende Produktion der Maschine), in dem der Bediener im führungskurvenfreien Bereich die Arbeiten durchführt, beispielsweise bei 90°, 180° oder 270°.

Insbesondere ist daran gedacht, dass sowohl die Öffnungs- und Schließkurve als auch die Verriegelungskurve Kurvenverläufe aufweisen, welche nur in einer Ebene in Relation zur Bewegungsbahn der Umformungsstation verlaufen und die zwei den Kurvenverläufen zugeordneten Ebenen parallel zueinander sind. Dabei heißt "in Relation zur Bewegungsbahn", dass eine mögliche Krümmung der Bewegungsbahn herausgerechnet ist - in anderen Worten: bei einer gekrümmten Bewegungsbahn der Umformungsstationen werden die Kurven "aufgerollt" betrachtet, so dass es einer linearen Bewegung entspricht. Es wird sozusagen nur die Relativbewegung der Umformungsstationen zur Kurve betrachtet bzw. die Kurve wird zweidimensional betrachtet.

Wenn sich die Kurvenverläufe bei einer um eine lotrechte Achse rundlaufenden Blasformmaschine beispielsweise entlang eines Teilkreises erstrecken und die Ansteuerung des Verriegelungsmechanismus und des Formträgeröffnungsmechanismus durch Höhenunterschiede im Kurvenverlauf hervorgerufen wird, so wäre die vom Kurvenverlauf aufgespannte Fläche zylinderförmig - wenn man allerdings nur die Relativbewegung berücksichtigt, liegen die Kurvenverläufe in einer vertikalen, flachen Ebene und sind parallel zueinander. In einem absoluten Bezugssystem (Aufstellhalle der Maschine) wären die Flächen von Verriegelungs- und Öffnungskurve in diesem Fall konzentrische Zylinder.

Bevorzugt sind sowohl die Öffnungs- und Schließkurve als auch die Verriegelungskurve bei einer um eine lotrechte Achse rundlaufenden Blasformmaschine horizontal angeordnet bzw. orientiert. Die Kurvenverläufe zeichnen sich in diesem Fall dadurch aus, dass sie unterschiedliche radiale Abstände zur Mittelachse der Maschine aufweisen. In anderen Worten entfernt sich der Kurvenverlauf von der Mittelachse in bestimmten Abschnitten entlang des Umfangs und nähert sich an anderen Umfangsabschnitten der Mittelachse. Dies ist besonders vorteilhaft, wenn die Formträgeröffnungsbewegung in einer horizontalen Ebene stattfindet bzw. durch eine Dreh- oder Schwenkbewegung um eine lotrechte Schwenkachse - so kann auf ein Umlenkungsgetriebe für die Formträgerbewegung im Vergleich zur vertikalen Kurve verzichtet werden.

Bevorzugt sind die Hauptkurve und die Verriegelungskurve derart ausgerichtet, dass die Kurvenfolger des Öffnungs- und Schließmechanismus und des Verriegelungsmechanismus jeweils und ausschließlich in horizontaler Richtung bewegt werden.

Dadurch, dass sowohl die Öffnungs- und Schließkurve als auch die Verriegelungskurve Kurvenverläufe aufweisen, die sich in parallelen Ebene befinden, wird eine bessere Ausgleichsmöglichkeit für die durch beide Kurvenverläufe hervorgerufene Bewegung des Kurvenfolgers der Verriegelung geschaffen. Auch kann durch diese Maßnahme - die Relativbewegung gesehen - eine lineare Bewegung des Kurvenfolgers an jeder Position entlang der Kurve sichergestellt werden.

In bestimmten Konfigurationen der Maschine kann es auch vorkommen, dass sich die Ebenen der Kurvenverläufe schneiden bzw. die Ebenen senkrecht aufeinander stehen, beispielsweise wenn die Ebene der Verrieglung lotrecht und die Ebene der Formträgeransteuerung horizontal ist. In diesem Fall würde der Kurvenfolger eine dreidimensionale Bewegung durchführen müssen - die Relativbewegung bereits berücksichtigt - und auf der Verriegelungskurve zusätzlich in radialer Richtung in Bezug auf die Maschinenachse bewegt werden. Bei Verwendung einer Rolle ist dies in Bezug auf den Verschleiß eher ungünstig. Man könnte jedoch eine Kugel als Kurvenfolger zu diesem Zweck einsetzen. Zusätzlich müsste die Kurve für diesen Fall sehr breit ausgelegt werden oder zusätzlich zum vertikalen Verlauf einen nicht konstanten radialen Verlauf aufweisen.

Insbesondere ist daran gedacht, dass die durchgängige Verriegelungskurve mindestens zwei Segmente aufweist, also mindestens zweiteilg aufgebaut ist, und sich ein Segment bevorzugt über mindestens 10° entlang eines Umfangswinkels erstreckt. Dadurch kann - sollten doch Stahlrollen verwendet werden - beispielsweise ein Anlaufsegment, an dem die Rollen aufschlagen, separat ausgetauscht werden.

Insbesondere weisen die Segmente auch Mittel zur Positionierung bzw. Einstellung (beispielsweise Nuten und/oder Passbohrungen) zueinander und/oder zu einem Maschinengestell auf.

Bevorzugt ist die Kurve jedoch einteilig ausgebildet. Somit kann der Einstellaufwand reduziert und ein schonender Lauf der Kurvenfolger ohne Lücken oder durch falsch eingestellte Segmente hervorgerufene Vorsprünge realisiert werden.

Bei einer weiteren vorteilhaften Ausführungsform weist die Vorrichtung einen Reinraum auf, innerhalb dessen die Umformungsstationen transportiert werden. Bei der vorteilhaften Ausführungsform sind dabei die Blasformträgerteile innerhalb dieses Reinraums angeordnet.

Ferner ist die Verriegelung durch Ihren einfachen Aufbau und der somit leichten Reinigbarkeit und Sterilisierbarkeit auch dazu geeignet, unter Reinraumbedingungen eingesetzt zu werden. Die Vorrichtung kann hierzu in einem Reinraum angeordnet werden, welcher unter einem leichten Überdruck gehalten wird, so dass keine Keime oder andere Verschmutzungen / Kontaminationen in die Maschine durch die Luft eindringen können. Ebenso kann die Vorrichtung einen Einlass für Sterilisationsmittel aufweisen, welches u.a. auch die Teile der Verriegelung sterilisiert.

Bei einer weiteren vorteilhaften Ausführungsform befinden sich Antriebseinrichtungen für die Verschließung, Verriegelung und/oder Öffnung der Umformungsstationen außerhalb des Reinraums. Vorteilhaft befinden sich entsprechende Antriebe, das heißt insbesondere Führungskurven, unterhalb und/oder oberhalb einer Reinraumgrenze.

Bei einer vorteilhaften Ausführungsform weist die Verriegelungseinrichtung ein schwenkbares Verriegelungselement auf. Vorteilhaft kann dabei dieses Verriegelungselement schwenkbar an einem der beiden Blasformträgerteile angeordnet sein. Besonders bevorzugt greift dieses Verriegelungselement in ein anderes Verriegelungselement eines anderen Blasformträgerteils ein.

Bei einer weiteren vorteilhaften Ausführungsform erstreckt sich die Verriegelungskurve entlang eines Umfangswinkels, der wenigstens 50° beträgt, bevorzugt wenigstens 60° beträgt und besonders bevorzugt wenigstens 70° beträgt. Um möglichst viel Prozesszeit zur Verfügung zu stellen, ist der Eingabestern und der Ausgabestern möglichst nah beieinander angeordnet, weswegen sich die Verriegelungskurve um weniger als 180°, bevorzugt um weniger als 140° und besonders bevorzugt um weniger als 110° erstreckt.

Insbesondere kann kurz nach dem Ende der Verriegelungskurve ein Sensor vorhanden sein, der den Öffnungs- und/oder Verriegelungszustand der Formträgerhälften überprüft. Insbesondere kann der Sensor als ein Berührungssensor ausgestaltet sein, der ein Fenster aufweist, durch das jeder Kurvenfolger der Verriegelung beim Umlauf des Trägers hindurchfährt. Falls eine Fehlstellung auftritt, also falls die Formträger nicht verriegelt und/oder nicht richtig geschlossen sind, fährt der Kurvenfolger gegen einen Teil eines das Fenster umgebenden Rahmens. Durch die Kollision mit dem Rahmen wird ein Signal über den Sensor an die Steuerungseinrichtung weitergegeben. Insbesondere kann ein Stopp der Produktion (u.a. ein Einleiten von Blasluft) bei Erhalt eines solchen Signals ausgelöst werden. In anderen Worten könnte dann die Bewegung des Trägers angehalten werden. Der Fensterrahmen weist insbesondere zwei Leisten auf, zwischen denen sich die Kurvenfolger durchbewegen. Dabei ist insbesondere eine Leiste in einer Position angeordnet, die entgegen einer Richtung einer Entriegelungsbewegung des Kurvenfolgers in Relation zum Blasrad von einer normalen Position beabstandet ist. Die andere Leiste befindet sich in der anderen Richtung versetzt. Es kann auch nur eine Leiste vorhanden sein. Insbesondere ist die Leiste oder sind die Leisten radial innerhalb und/oder radial außerhalb der Bahn angeordnet, in der sich der Kurvenfolger im Normalbetrieb befindet.

Die vorliegende Erfindung ist weiterhin auf ein Verfahren zum Umformen von Kunststoffvorformlinge zu Kunststoffbehältnissen gerichtet, wobei die Kunststoffvorformlinge mittels Umformungsstationen entlang eines vorgegebenen Transportpfades transportiert und während dieses Transports zu den Kunststoffbehältnissen umgeformt werden. Dabei weisen die Umformungsstationen Blasformträgerteile auf, die bezüglich einander bewegbar sind, um die Umformungsstationen zu schließen. Weiterhin werden mittels eines Verriegelungsmechanismus die (beiden) Blasformteile zumindest zeitweise während des Umformungsvorgang aneinander gehalten - insbesondere ohne Einwirkung einer Verriegelungskurve.

Erfindungsgemäß liegt ein Kurvenfolger des Verriegelungsmechanismus kurz nach einem Beginn eines Öffnungsvorgangs bis kurz vor einem Ende eines Schließvorgangs der Blasformträgerteile ständig an einer ihm zugeordneten Verriegelungskurve an.

Der Zeitpunkt für den Beginn des Öffnens ist der des Anfangs des Entfernens der Blasformträgerteile voneinander. "Kurz nach" und "kurz vor" sollen in diesem Zusammenhang jeweils ca. 10% der Zeit oder des zurückgelegten Weges des Formträgers während der gesamten Öffnungsphase während eines Umlaufs bedeuten. Das heiß, dass der Kurvenfolger mindestens über 80% des Weges oder der Zeit mit der Verriegelungskurve in Kontakt steht, während der Formträger geöffnet ist. Insbesondere ist es auch möglich, dass es mehr als 95% sind, bevorzugt sind es 100%.

Weitere Vorteile und Ausführungsformen ergeben sich aus den beigefügten Zeichnungen:
Darin zeigen:
   - Fig. 1: eine schematische Darstellung einer Anlage zum Herstellen von Behältnissen;
   - Fig. 2: eine schematische Darstellung einer Umformungsstation;
   - Fig. 3: eine schematische Darstellung eines Entriegelungsvorgangs für eine Umformungsstation;
   - Fig. 4: eine weitere Darstellung zur Veranschaulichung eines Öffnungsvorgangs;
   - Fig. 5: eine Darstellung einer Umformungsstation mit alternativer Verriegelungskurve;
   - Fig. 6: eine weitere Ausführungsform;
   - Fig. 7: eine weitere Darstellung eines Verriegelungsmechanismus;
   - Fig. 8: eine Darstellung von Kurvenverläufen.

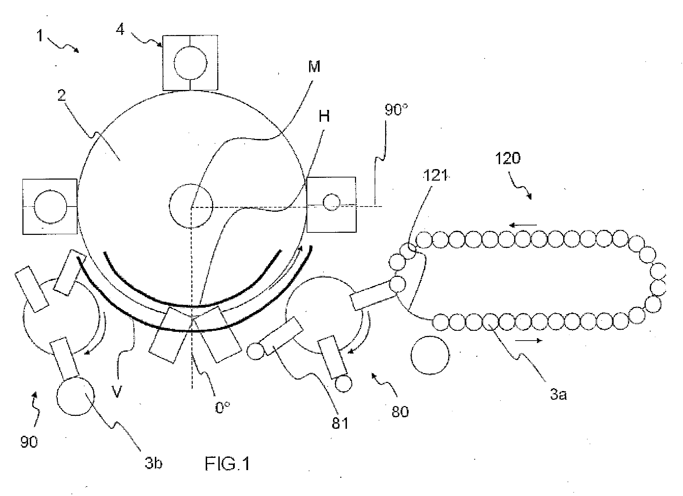

Fig. 1 zeigt eine erfindungsgemäße Vorrichtung 1 zum Herstellen von Kunststoffbehältnissen 3b. Dabei werden Kunststoffvorformlinge 3a zunächst an einer Transportkette 121 geführt und mittels einer Erwärmungseinrichtung 120 erwärmt. Anschließend werden die so erwärmten Kunststoffvorformlinge 3a von einem Zuführstern 80 übernommen und an eine Vielzahl von Umformungsstationen 4 übergeben. Dieser Zuführstern 80 weist dabei eine Vielzahl von gegenüber diesem Stern schwenkbaren Armen 81 auf, an denen jeweils Halteelemente, beispielsweise Klammern, zum Halten der Kunststoffvorformlinge angeordnet sind (nicht gezeigt).

Das Bezugszeichen 2 bezieht sich auf einen drehbaren Träger, an dem eine Vielzahl von Umformungsstationen 4 (hier schematisch nur vier gezeigt) angeordnet ist. Diese Umformungsstationen 4 weisen dabei ein erstes Blasformträgerteil 6 und ein zweites Blasformträgerteil 7 auf. An diesen Trägerteilen sind Blasformteile angeordnet, sodass bei einem Schließen dieser Blasformträgerteile 6, 7 auch die Blasformteile geschlossen werden und so in ihrem Inneren einen Hohlraum bilden, der zum Expandieren der Kunststoffvorformlinge 3a dient. Die Kontur der Behälter 3b könnte auch direkt in die Blasformträgerteile 6, 7 eingefräst sein, dies macht jedoch Schwierigkeiten, wenn mit der Maschine 1 unterschiedliche Behältertypen hergestellt werden sollen. Das Bezugszeichen 90 kennzeichnet einen Abführstern, mit dem die expandierten Kunststoffbehältnisse 3b abtransportiert werden können. Zwischen den Sternen 80 und 90 ist die Winkelmarkierung 0° erkennbar. Die Sternenachsen 80 und 90 sind im Wesentlichen symmetrisch zu dieser Winkelmarkierung, also im fast gleichen Abstand zu dieser, angeordnet. Außerdem weisen die Sterne im Wesentlichen den gleichen Abstand zur Maschinendrehachse M auf. Die 0°-Markierung geht durch die Maschinendrehachse M. Die Blasformträgerteile 6, 7 werden auch Formträger genannt.

Die Kurven H und V sind im Bereich der Transportsterne 80 und 90 angeordnet und liegen in der Peripherie des Umlaufweges der Blasstationen 4. Dabei ist zu erkennen, dass sich die Kurve V durchgehend zwischen den Transportsternen erstreckt.

Steigungen bzw. Krümmungsänderungen der Kurven K und V sind hier nicht berücksichtigt. Dies soll in den folgenden Figuren veranschaulicht werden.

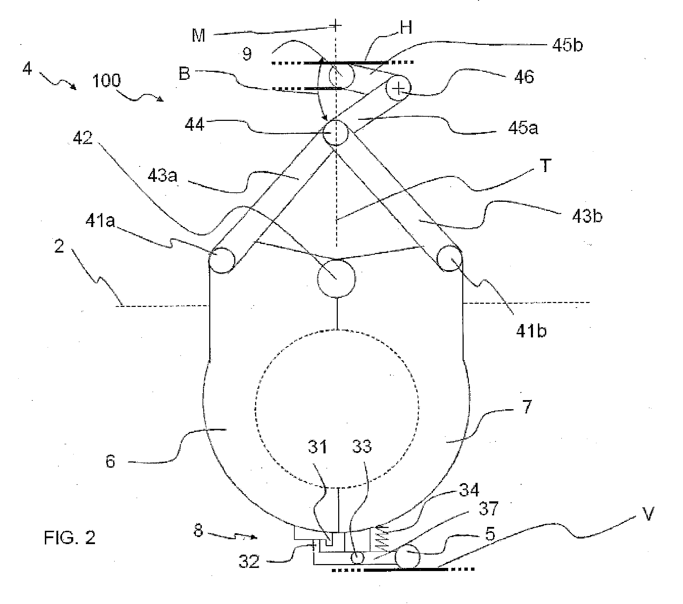

Fig. 2 zeigt eine Darstellung einer Umformungsstation 4. Diese Umformungsstation 4 weist dabei ein erstes Blasformträgerteil bzw. einen ersten Blasformträger 6 und ein zweites Blasformträgerteil bzw. einen zweiten Blasformträger 7 auf. Das Bezugszeichen 42 kennzeichnet eine sich senkrecht zu der Figurenebene erstreckende Welle bzw. ein Drehlager bezüglich dessen die beiden Formträger 6 und 7 schwenkbar gelagert sind. Dieses Drehlager ist dabei vorteilhaft stationär an dem oben gezeigten Träger 2 angeordnet. An den jeweiligen Formträgerteilen 6 und 7 sind Halterungen 41 a, 41 b angeordnet, an denen wiederum durch gerade Striche gezeigte Anlenkungen 43a, 43b (Anlenkhebel) schwenkbar angeordnet sind. Das Bezugszeichen 9 kennzeichnet eine Kurvenrolle, die zum Öffnen und Schließen der beiden Formträgerteile 6 und 7 dient. Die Bezugszeichen 45a und 45b kennzeichnen eine Stangenverbindung, mit der die Kurvenrolle 9 mit einem zu dem Blasrad 2 stationären Drehlager 46 verbunden ist. Das Bezugszeichen 44 kennzeichnet ein bezüglich des Blasrades bewegliches Drehlager, durch dessen Bewegung (Pfeil B) beispielsweise nach oben die Formträgerteile 6 und 7 geöffnet werden können. Die Elemente 9, 45a, 45b sind vorteilhaft fest miteinander verbunden und drehbar um Lager 46 befestigt.

Das Bezugszeichen 8 kennzeichnet in seiner Gesamtheit einen Verriegelungsmechanismus bzw. die Verriegelung. Dieser Verriegelungsmechanismus 8 weist dabei einen schwenkbaren Verriegelungshebel 37 auf, der bezüglich eines Drehlagers 33 um eine Achse drehbar ist, die hier senkrecht zu der Figurenebene ist. Damit ist die Schwenkachse hier auch senkrecht zu einem Transportpfad der Umformungsstationen. Damit ist dieser Verriegelungshebel 37 schwenkbar an dem zweiten Formträgerteil 7 angeordnet. An dem Verriegelungshebel 37 ist ein Verriegelungselement 32 angeordnet, welches in Form eines Vorsprungs radial einwärts in Richtung der Achse 42 ausgebildet ist. Der Vorsprung 32 ist in Form eines Hakens ausgebildet, welcher sich insbesondere über einen wesentlichen Teil der Höhe des Formträgers 7 erstreckt - ebenso das Element 31.

An einem ersten Formträgerteil 6 ist ein weiteres Verriegelungselement 31 angeordnet, welches unbeweglich gegenüber dem Formträger 6 ist.

Das Bezugszeichen 34 bezieht sich auf eine Druckfeder, welche das Verriegelungselement 32 auf das zweite Formträgerteil 6 zudrängt bzw. das Verriegelungselement 32 in Richtung einer Verriegelungsstellung in Richtung Element 31 drängt.

Das Bezugszeichen 5 bezieht sich auf eine weitere Kurvenrolle, die hier zur Bewegung des Verriegelungselements 32 und insbesondere zum Öffnen der Verriegelung 8 dient. Zu diesem Zweck ist eine weitere Führungskurve vorgesehen, die Verriegelungskurve V. Diese weist nur eine Führungsfläche auf, welche insbesondere radial nach innen in Richtung der Achse M zeigt, wohingegen die Hauptkurve H zwei Führungsflächen für den Kurvenfolger 9 in Form einer Nut aufweist, da die Formträgerhälften in beide Richtungen aktiv bewegt werden müssen. Bei der Verriegelung 8 hingegen wird ein Zuziehen von der Feder 34 übernommen, weswegen eine einseitige Führungskurve V ausreicht. Bezugszeichen T kennzeichnet eine Trennebene zwischen den Formträgerteilen 6 und 7, welche hier senkrecht zur Umlaufbahn der Umformungsstation 4 angeordnet ist und sich durch die Achse 43 und M erstreckt. Insbesondere kann die Trennebene aber auch in einem Winkel zur Tangentialen zur Umlaufbahn angeordnet sein, so dass die Schwenkachse 43 mit der Bewegung des Blasrads 2 voreilend gegenüber der Verriegelung 8 angeordnet ist. Die Vorformlinge 3a könnten so mehr von hinten in die Blasform eingegeben werden, was Vorteile in der Kinematik der Transportsterne 80 und 90 und in einer platzsparenden Anordnung der Stationen 4 zueinander hätte. Die Kurven H und V und das Blasrad 2 sind hier in der aufgerollten Ansicht zu sehen.

Es ist auch die Einfachheit der Verriegelung 8 zu erkennen: Alle relativ zu den Formträgern 6 und 7 beweglichen Teile der Verriegelung 8 sind unmittelbar miteinander verbunden. Das heißt, dass kein Getriebe zur Bewegung des Mechanismus zwischengeschalten ist. Die beweglichen Teile sind nur über eine einzige Achse 33 schwenkbar.

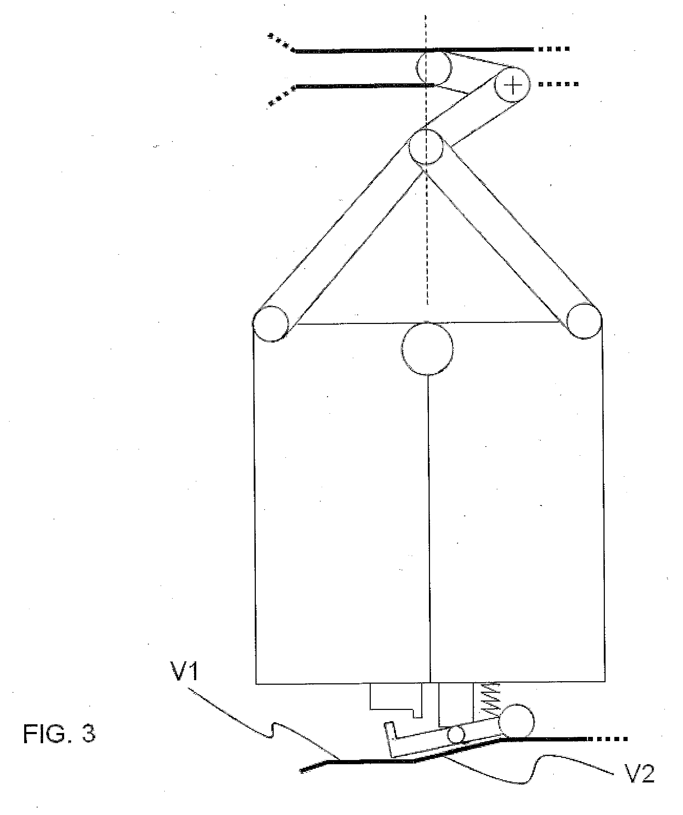

Figur 3 zeigt den Öffnungsvorgang für die Verriegelung 8. Der Formträger 6, 7 kommt beim Umlaufen an der Verriegelungskurve V vorbei, welche im Abschnitt V2 den Kurvenfolger 5 betätigt und gegen die Kraft der Feder 34 drückt, so dass der Hebel 37 um Lager 33 geschwenkt wird und sich der Vorsprung 32 von dem Element 31 des anderen Formträgers abhebt. Der Formschluss zwischen den Elementen 31 und 32 wird somit aufgehoben und der Formträger kann nun geöffnet werden. Ebenfalls ist ein Anlaufsegment V1 zu sehen, in dem die Rolle beschleunigt wird. Das Anlaufsegment weist auch ein nicht mit Bezugszeichen versehenes Fangsegment auf. Hier bedeutet "Segment" nicht zwingend, dass es sich um mehrere Teile handelt.

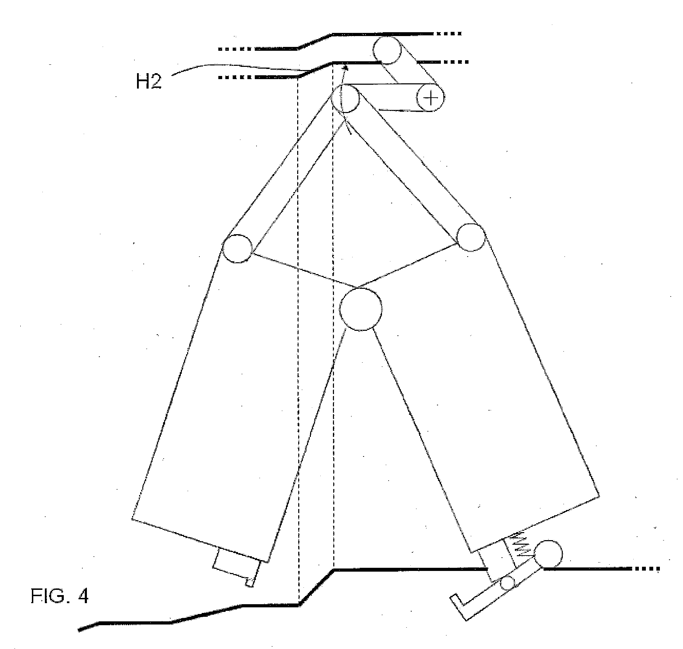

Der Öffnungsvorgang der Formträgerhälften 6 und 7 ist in Figur 4 veranschaulicht. Dabei bewegt sich die Umformungsstation 4 hier von links nach rechts (wie in Figuren 2 und 3). Nach dem Entriegeln wird die Blasstation vom Träger 2 an dem Kurvenabschnitt H2 vorbeigeführt, welcher eine Steigung besitzt und die Kurvenrolle 9 in eine andere radiale Position in Bezug auf das Blasrad 2 bewegt. Somit wird der Öffnungsmechanismus 100 für die Formträger betätigt. Gleichzeitig bzw. an der im Wesentlichen selben Position in Umfangsrichtung weist die Verriegelungskurve ebenfalls eine Steigung auf, welche bewirkt, dass die Kurvenrolle 5 der Verriegelung an der Kurve V anliegen bleibt. In anderen Worten weist die Verriegelungskurve V in derselben Umfangsposition, in der die Hauptkurve H eine Krümmungsänderung zum Öffnen der Formträger 6, 7 aufweist, ebenfalls eine Krümmungsänderung auf, um den Kurvenfolger 5 der Verriegelung 8 an der Verriegelungskurve V zu halten. Gleiches gilt für die Schließbewegung, um die Abstände zwischen den Kurven H, V und Kurvenfolgern 5, 9 wieder in den Zustand von Figur 3 nach einem Schließen zurückzuführen.

Man könnte auch sagen, dass die Verriegelungskurve V und die Hauptkurve H so aufeinander abgestimmt sind, dass die Verriegelung V im Bereich nach dem Anfang des Öffnens der Formträger 6, 7 bis zum Ende des Schließens ständig betätigt wird.

Insbesondere ist sie währenddessen auch in der den Formschluss auflösenden Position. Es wäre aber auch denkbar, die Verriegelung 8 nur geringfügig zu betätigen, um die von der Feder 34 ausgeübten Belastung auf die Rolle 5 bzw. die Kurve V gering zu halten.

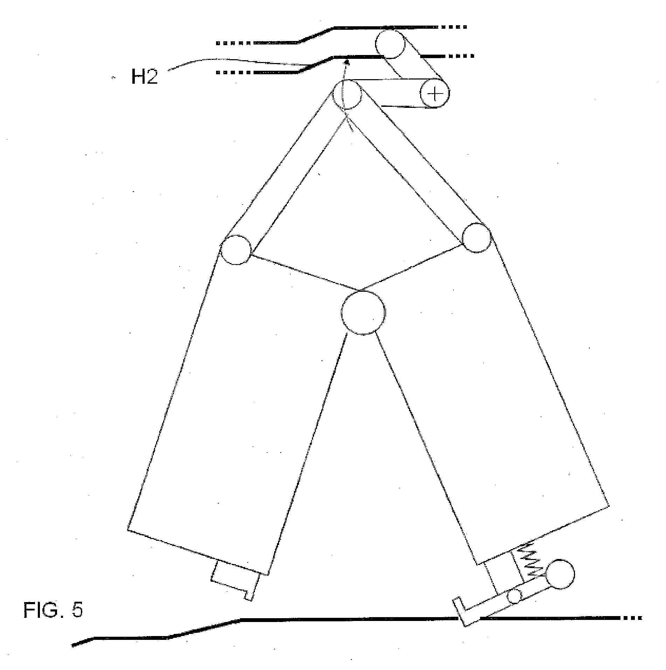

Die Situation, in der die Verriegelungskurve V nicht auf die Hauptkurve abgestimmt ist, ist in Figur 5 dargestellt. Dies würde zwar auch funktionieren, da bei der Schließbewegung der Formträger die Rolle 5 wieder an die Kurve zum Anliegen und zur Betätigung käme und die Verriegelung 8 somit wieder öffnen würde, jedoch müsste der Kurvenfolger 5 zwei mal pro Umlauf beschleunigt werden.

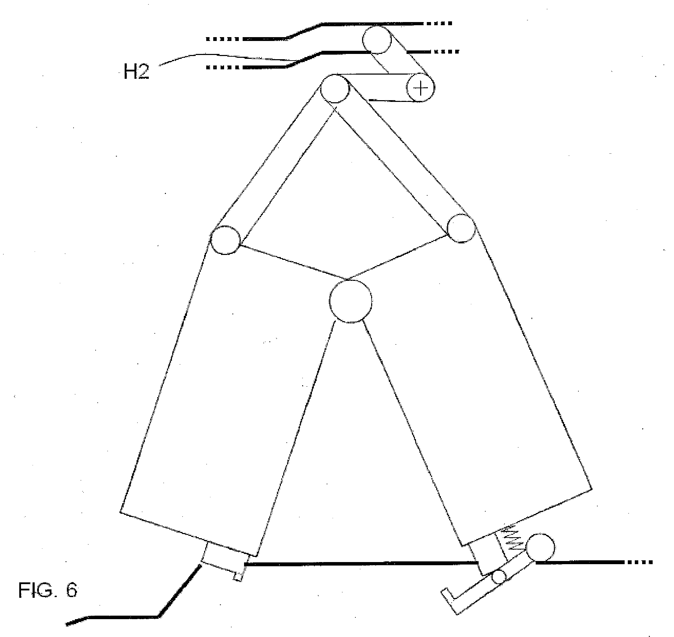

Eine andere Lösung wäre hierfür, den von der Feder 34 bzw. den vom Hebel 37 zurücklegbaren Weg ausreichend groß zu gestalten, so dass direkt beim Entriegeln die Kurve V die Rolle 5 so weit in die Entriegelungsposition drückt, dass eine aufgrund der Öffnungsbewegung des Formträgers 6, 7 ausgelöste Entfernung der Rolle 5 von der Kurve V kompensiert werden kann. Dies ist in Figur 6 dargestellt.

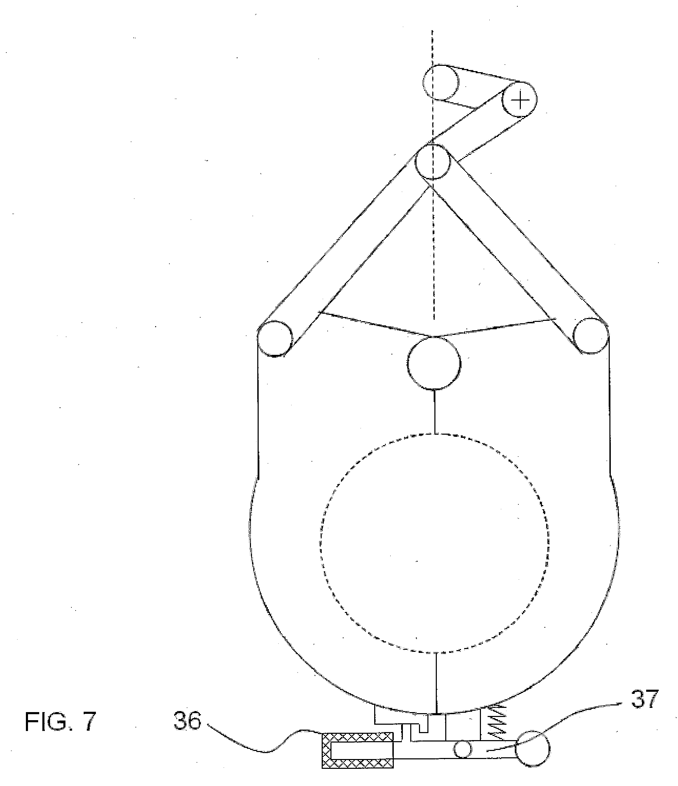

Figur 7 zeigt einen an der Verriegelung angebrachten Handhebel 36, mit welchem sich die Ver- und Entriegelung als auch insbesondere das Öffnen der Formträgerhälften 6, 7 bewerkstelligen lässt. Der Hebel 36 ist dazu direkt am Hebel 37 angebracht. Der Bediener muss nur die Kraft der Feder 34 überwinden.

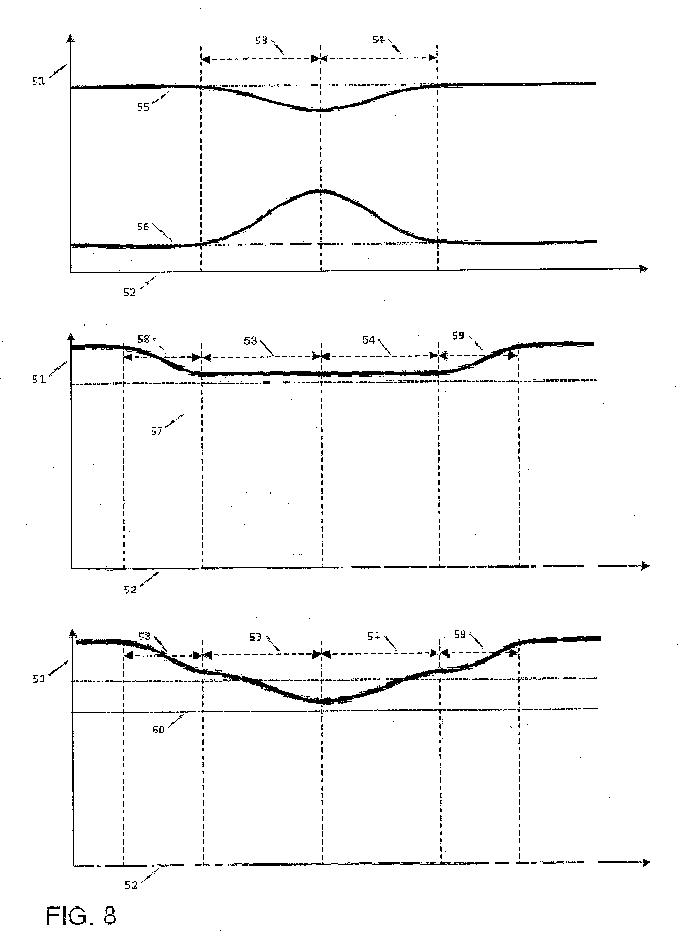

Figur 8 zeigt die Kurvenverläufe der Verriegelungskurve V und der Hauptkurve H relativ zueinander bei einer Blasformmaschine 1 mit horizontalen Kurvenverläufen und vertikaler Drehachse M des Blasrads 2. Dabei stellt die Achse 51 die radiale Amplitude der Rollen 5, 9 dar und die Achse 52 die Umfangsposition bzw. den Winkelverlauf dar.

### Oberes Bild:

Die Kurve 55 kennzeichnet den Kurvenverlauf der Formträgeröffnung, die Kurve 56 kennzeichnet den Öffnungswinkel der Formträger. Man erkennt im Bereich 53 das Öffnen der Formträger und im Bereich 54 das Schließen der Formträger. Die maximale Öffnungsposition wird dabei nur in einem sehr kleinen Bereich, insbesondere nur in einem Punkt erreicht. Während annähernd des ganzen Öffnungs- und Schließprozesses werden die Formträgerteile 6, 7 relativ zum Blasrad 2 bewegt. Insbesondere ist der Kurvenverlauf stetig.

### Mittleres Bild:

Die Kurve 57 kennzeichnet die radiale Amplitude der Kurvenrolle 5 in Relation zur Formträgerhälfte 7, an der sie befestigt ist. Im Bereich 58 findet die Entriegelung, im Bereich 59 die Verriegelung statt. Man erkennt, dass die Bereiche der Formträgeröffnung und -schließung (53, 54) fast oder sogar ganzlich übergangslos an die Bereiche der Ver- und Entriegelung (58, 59) angrenzen. Hier ist durch den geraden Bereich des Kurvenverlaufs im Bereich 53 und 54 erkennbar, dass die Verriegelungskurve V so gestaltet ist, dass sie ein durch die Bewegung des Formträgers 7 hervorgerufenes radiales Entfernen und ein Nähern ausgleicht. Die Entriegelung beginnt vorteilsweise vor einem Beginn des Öffnens. Die Verriegelung kann schon vor einem endgültigen Schließen beginnen, endet aber insbesondere erst bei oder nach einem Abschluss des Schließvorgangs.

### Unteres Bild:

Im Gegensatz dazu ist im unteren Bild die Amplitude der Rolle 5 in Relation zum Blasrad 2 aufgetragen. Dies entspricht somit dem Kurvenverlauf der Verriegelungskurve V (aufgerollt). Hier ist erkennbar, dass die Verriegelungskurve aus den zum mittleren Bild genannten Gründen im Bereich des Öffnungsbeginns des Formträgers (Ende Bereich 58, Beginn Bereich 53) zwei Krümmungsänderungen aufweist. Ebenso im Bereich vom Ende des Schließens bis zum Anfang des Verriegelns.

Es wäre auch denkbar, dass die Formträgerhälften über einen Bereich des Weges nach dem Öffnen einen konstanten Öffnungswinkel aufweisen und erst dann wieder geschlossen werden. Dieser Bereich kann sich über mindestens 5° erstrecken.

Insgesamt entspricht Figur 8 im Wesentlichen dem Ausführungsbeispiel nach den Figuren 3 und 4.

## Patentansprüche

1. Vorrichtung (1) zum Umformen von Kunststoffbehältnissen, mit einem umlaufenden Träger (2), an dem eine Vielzahl von Umformungsstationen (4) zum Umformen von Kunststoffvorformlingen (3a) zu Kunststoffbehältnissen (3b) angeordnet ist, wobei diese Umformungsstationen (4) bezüglich einander bewegbare Blasformträgerteile (6, 7) zum Öffnen und Schließen der Umformungsstationen (4) aufweisen und wobei die Umformungsstationen (4) einen Verriegelungsmechanismus (8) aufweisen, um die Umformungsstationen (4) in einem geschlossenen Zustand zu halten und mit einem Öffnungs- und Schließmechanismus (100), um die Umformungsstationen zu öffnen und zu schließen,
**dadurch gekennzeichnet, dass**
der Verriegelungsmechanismus (8) eine Verriegelungsskurve (V) aufweist, der gegenüber sich die Umformungsstationen (4) zumindest teilweise bewegen, wobei sich diese Verriegelungsskurve (V), in Bewegungsrichtung des Trägers (2) gesehen, durchgängig zwischen einer Position erstreckt, in der die Blasformträgerteile geöffnet werden und einer Position, in der die Blasformträgerteile (6, 7) geschlossen werden und dass die Blasformträgerteile (6, 7) zumindest entlang eines weiteren Teilabschnitts des Umlaufs durch eine an den Blasformträgerteilen (6, 7) angeordnete Verriegelung (8) selbstständig im geschlossenen Zustand gehalten werden.

2. Vorrichtung (1) nach Anspruch 1,
**dadurch gekennzeichnet, dass**
der Bereich des Teilabschnitts verriegelungskurvenfrei ausgebildet ist.

3. Vorrichtung (1) nach wenigstens einem der vorangegangenen Ansprüche,
**dadurch gekennzeichnet, dass**
die Vorrichtung (1) eine, insbesondere stationäre, Öffnungs- und Schließkurve (H) aufweist, welche ein Öffnen und Schließen der Umformungsstation bewirkt und der Öffnungs- und Schließmechanismus einen Kurvenfolger (9) aufweist, welcher mit der Öffnungs- und Schließkurve (H) bei Bewegung des Trägers (2) zusammenwirkt.

4. Vorrichtung (1) nach wenigstens einem der vorangegangenen Ansprüche,
**dadurch gekennzeichnet, dass**
der Verriegelungsmechanismus (8) einen Kurvenfolger (5) aufweist, welcher mit der, insbesondere stationären, Verriegelungskurve (V) bei Bewegung des Trägers (2) zusammenwirkt.

5. Vorrichtung (1) nach wenigstens einem der vorangegangenen Ansprüche,
**dadurch gekennzeichnet, dass**
die Position des dem Verriegelungsmechanismus (8) zugeordneten Kurvenfolgers relativ zum Träger (2) durch den Öffnungs- und Schließmechanismus (100) veränderbar ist und die Verriegelungskurve (V) einen Kurvenverlauf aufweist, welcher, in Bewegungsrichtung des Trägers (2) gesehen, nach einem Entriegelungsabschnitt und vor einem Verriegelungsabschnitt, die von der Öffnungs- und/oder Schließbewegungbewegung der Blasformträgerteile (6, 7) abhängige Positionsveränderung des dem Verriegelungsmechanismus (8) zugeordneten Kurvenfolgers (5) derart ausgleicht, dass dieser Kurvenfolger (5) in diesem Bereich ständig an der Verriegelungskurve (V) anliegt.

6. Vorrichtung (1) nach wenigstens einem der vorangegangenen Ansprüche,
**dadurch gekennzeichnet, dass**
sowohl die Öffnungs- und Schließkurve (H) als auch die Verriegelungskurve (V) Kurvenverläufe aufweisen, welche nur in einer Ebene in Relation zur Bewegungsbahn der Umformungsstation (4) verlaufen und die zwei den Kurvenverläufen zugeordneten Ebenen parallel zueinander sind.

7. Vorrichtung (1) nach Anspruch 4 bis 6,
**dadurch gekennzeichnet, dass**
die Öffnungs- und Schließkurve (H) und die Verriegelungskurve (V) derart ausgerichtet sind, dass die Kurvenfolger (5, 9) des Öffnungs- und Schließmechanismus (100) und des Verriegelungsmechanismus (8) jeweils und ausschließlich in horizontaler Richtung bewegt werden.

8. Vorrichtung (1) nach wenigstens einem der vorangegangenen Ansprüche,
**dadurch gekennzeichnet, dass**
die Verriegelungskurve (V) mindestens zwei Segmente aufweist, also mindestens zweiteilg aufgebaut ist, und sich ein Segment bevorzugt über mindestens 10° entlang eines Umfangswinkels erstreckt.

9. Vorrichtung (1) nach einem der Ansprüche 1 bis 4,
**dadurch gekennzeichnet, dass**
die Verriegelungskurve (V) einteilig ausgebildet ist.

10. Vorrichtung (1) nach wenigstens einem der vorangegangenen Ansprüche,
**dadurch gekennzeichnet, dass**
der Kurvenfolger (5) des Verriegelungsmechanismus (8) aus einem Kunststoff besteht und die Verriegelungskurve (V) ungehärtet, und insbesondere ungeschmiert, ausgebildet ist.

11. Vorrichtung (1) nach wenigstens einem der vorangegangenen Ansprüche,
**dadurch gekennzeichnet, dass**
die Verriegelung (8) einen Kraftspeicher (34), insbesondere eine Feder, aufweist und von dem Kraftspeicher (34) ständig in eine Verrieglungsposition gedrängt wird und der Kraftspeicher durch die Verriegelungskurve (V) im Entriegelungsbereich in eine Spannrichtung gedrängt wird.

12. Vorrichtung (1) nach wenigstens einem der vorangegangenen Ansprüche,
**dadurch gekennzeichnet, dass**
der Verriegelungsmechanismus (8) ein an dem einen Blasformträgerteil (6) angeordnetes Element (31) und ein an dem anderen Blasformträgerteil angeordnetes Element (37, 32) aufweist und die zwei Elemente (31, 32, 37) formschlüssig zur Verriegelung der Blasformträger (6, 7) miteinander zusammenwirken und wobei ein Element (32, 37) in Relation zu dem zu diesem Element (32, 37) zugeordneten Blasformträgerteil (7) beweglich angeordnet ist und, insbesondere unmittelbar, an diesem Element (32, 37) ein Kurvenfolger (5) angeordnet ist.

13. Vorrichtung (1) nach Anspruch 12,
**dadurch gekennzeichnet, dass**
das bewegbare Element (32, 37) um eine Achse (33) schwenkbar gelagert ist und sich auf einer Seite der Achse (33) der Kurvenfolger (5) befindet und auf der anderen Seite der Achse (33) das im Formschluss der Verriegelung befindliche Teilelement (32).

14. Vorrichtung (1) nach einem der Ansprüche 12 oder 13,
**dadurch gekennzeichnet, dass**
an dem bewegbaren Element (32, 37) ein Handhebel (36) angeordnet ist, über den der Kraftspeicher (34) derart spannbar ist, dass der Formschluss der Verriegelungselemente (31, 32, 37) manuell aufgehoben und die Blasformträgerteile (6, 7) geöffnet werden können.

15. Vorrichtung (1) nach wenigstens einem der vorangegangenen Ansprüche,
**dadurch gekennzeichnet, dass**
der Träger (2) als ein im Wesentlichen runder Maschinentisch ausgebildet ist und um eine lotrechte Achse (M) umläuft, wobei beide Blasformträgerteile (6, 7) der Umformungsstationen (4) an einer, am Maschinentisch angeordneten, lotrechten und insbesondere gemeinsamen, Achse (42) schwenkbar gelagert sind und das bewegbare Verriegelungselement (32, 37) ebenfalls um eine lotrechte Achse (33) schwenkbar angeordnet ist und die Verriegelungsachse (33) im verriegelten Zustand der Blasformträgerteile (6, 7) weiter von der Maschinentischachse (M) beabstandet ist als die Achse (42) oder die Achsen beider Blasformträgerteile (6, 7).

16. Verfahren zum Umformen von Kunststoffvorformlinge (3a) zu Kunststoffbehältnissen (3b), wobei die Kunststoffvorformlinge (3a) mittels Umformungsstationen (4) entlang eines vorgegebenen Transportpfades transportiert und während dieses Transports zu den Kunststoffbehältnissen (3b) umgeformt werden, und wobei die Umformungsstationen (4) Blasformträgerteile (6, 7) aufweisen, die durch einen Öffnungs- und Schließmechanismus (100) bezüglich einander bewegbar sind, um die Umformungsstationen (4) zu schließen, und wobei die Blasformträgerteile (6, 7) mittels eines Verriegelungsmechanismus (8) zumindest zeitweise während des Umformungsvorgang selbstständig aneinander gehalten werden
**dadurch gekennzeichnet, dass**
ein Kurvenfolger (5) des Verriegelungsmechanismus (8) kurz nach einem Beginn eines Öffnungsvorgangs bis kurz vor einem Ende eines Schließvorgangs der Blasformträgerteile (6, 7) ständig an einer ihm zugeordneten Verriegelungskurve (V) anliegt.

## Claims

1. An apparatus (1) for the shaping of plastics material containers, with a rotating carrier (2) on which are arranged a plurality of shaping stations (4) for the shaping of plastics material pre-forms (3a) into plastics material containers (3b), wherein these shaping stations (4) have blow mould carrier parts (6, 7) movable with respect to each other for opening and closing the shaping stations (4), and wherein the shaping stations (4) have a locking mechanism (8) in order to hold the shaping stations (4) in a closed state, and with an opening and closing mechanism (100) in order to open and to close the shaping stations, **characterized in that** the locking mechanism (8) has a locking cam (V) against which the shaping stations (4) move at least in part, wherein this locking cam (V) extends - as viewed in the direction of movement of the carrier (2) - continuously between a position in which the blow mould carrier parts are opened and a position in which the blow mould carrier parts (6, 7) are closed, and the blow mould carrier parts (6, 7) are held automatically in the closed state at least along a further partial section of the periphery by a locking means (8) arranged on the blow mould carrier parts (6, 7).

2. An apparatus (1) according to claim 1, **characterized in that** the region of the partial section is made free of the locking cam.

3. An apparatus (1) according to at least one of the preceding claims, **characterized in that** the apparatus (1) has an opening and closing cam (H), in particular stationary, which causes the shaping station to open and close, and the opening and closing mechanism has a cam follower (9) which co-operates with the opening and closing cam (H) during the movement of the carrier (2).

4. An apparatus (1) according to at least one of the preceding claims, **characterized in that** the locking mechanism (8) has a cam follower (5) which co-operates with the locking cam (V), in particular stationary, during the movement of the carrier (2).

5. An apparatus (1) according to at least one of the preceding claims, **characterized in that** the position of the cam follower associated with the locking mechanism (8) is capable of being changed relative to the carrier (2) by the opening and closing mechanism (100), and the locking cam (V) has a shape which, downstream of an unlocking portion and upstream of a locking portion as viewed in the direction of movement of the carrier (2), compensates the change in position - dependent upon the opening and/or closing movement of the blow mould carrier parts (6, 7) - of the cam follower (5) associated with the locking mechanism (8), in such a way that this cam follower (5) constantly rests against the locking cam (V) in this region.

6. An apparatus (1) according to at least one of the preceding claims, **characterized in that** both the opening and closing cam (H) and the locking cam (V) have shapes which extend only in one plane in relation to the movement path of the shaping station (4), and the two planes associated with the cam shapes are parallel to each other.

7. An apparatus (1) according to claims 4 to 6, **characterized in that** the opening and closing cam (H) and the locking cam (V) are orientated in such a way that the cam followers (5, 9) of the opening and closing mechanism (100) and the locking mechanism (8) are moved in each case and exclusively in the horizontal direction.

8. An apparatus (1) according to at least one of the preceding claims, **characterized in that** the locking cam (V) has at least two segments, i.e. it is constructed in at least two parts, and a segment preferably extends over at least 10° along a peripheral angle.

9. An apparatus (1) according to any one of claims 1 to 4, **characterized in that** the locking cam (V) is made in one piece.

10. An apparatus (1) according to at least one of the preceding claims, **characterized in that** the cam follower (5) of the locking mechanism (8) consists of a plastics material, and the locking cam (V) is made non-hardened and, in particular, non-lubricated.

11. An apparatus (1) according to at least one of the preceding claims, **characterized in that** the locking means (8) has a force reservoir (34), in particular a spring, and it is constantly forced by the force reservoir (34) into a locking position, and the force reservoir is forced in a tensioning direction by the locking cam (V) in the unlocking region.

12. An apparatus (1) according to at least one of the preceding claims, **characterized in that** the locking mechanism (8) has an element (31) arranged on one blow mould carrier part (6) and an element (37, 32) arranged on the other blow mould carrier part, and the two elements (31, 32, 37) co-operate with each other in a positively locking manner in order to lock the blow mould carriers (6, 7), and wherein an element (32, 37) is arranged so as to be movable in relation to the blow mould carrier part (7) associated with this element (32, 37), and a cam follower (5) is arranged, in particular in a direct manner, on this element (32, 37).

13. An apparatus (1) according to claim 12, **characterized in that** the movable element (32, 37) is mounted so as to be pivotable about an axle (33) and the cam follower (5) is situated on one side of the axle (33) and the part (32) of the element in positive locking with the locking means is situated on the other side of the axle (33).

14. An apparatus (1) according to any one of claims 12 or 13, **characterized in that** the movable element (32, 37) has arranged on it a manual lever (36) by way of which the force reservoir (34) is capable of being tensioned in such a way that the positive locking of the locking elements (31, 32, 37) can be discontinued manually and the blow mould carrier parts (6, 7) can be opened.

15. An apparatus (1) according to at least one of the preceding claims, **characterized in that** the carrier (2) is designed in the form of a substantially round machine table and revolves about a perpendicular axis (M), wherein the two blow mould carrier parts (6, 7) of the shaping stations (4) are mounted in a pivotable manner on a perpendicular, and in particular common, axle (42) arranged on the machine table and the movable locking element (32, 37) is likewise arranged so as to be pivotable about a perpendicular axle (33), and in the locked state of the blow mould carrier parts (6, 7) the locking axle (33) is situated at a greater distance from the axis (M) of the machine table than the axle (42) or the axles of the two blow mould carrier parts (6, 7).

16. A method of shaping plastics material pre-forms (3a) into plastics material containers (3b), wherein the plastics material pre-forms (3a) are conveyed by means of shaping stations (4) along a pre-set conveying path and are shaped to form the plastics material containers (3b) during this conveying, and wherein the shaping stations (4) have blow mould carrier parts (6, 7) which are capable of being moved with respect to each other by an opening and closing mechanism (100) in order to close the shaping stations (4), and wherein the blow mould carrier parts are automatically held against each other by means of a locking mechanism (8) at least for a time during the shaping procedure, **characterized in that** from shortly after a beginning of an opening procedure until shortly before a conclusion of a closure procedure of the blow mould carrier parts (6, 7) a cam follower (5) of the locking mechanism (8) constantly rests against a locking cam (V) associated with it.

## Revendications

1. Dispositif (1) de transformation de récipients en matière plastique, avec un support (2) tournant, sur lequel est disposée une pluralité de stations de transformation (4) pour la transformation de préformes en matière plastique (3a) en récipients en matière plastique (3b), lesdites stations de transformation (4) présentant des parties de support de moule de soufflage (6, 7) mobiles l'une par rapport à l'autre pour l'ouverture et la fermeture des stations de transformation (4), et les stations de transformation (4) présentant un mécanisme de verrouillage (8) pour maintenir les stations de transformation (4) en état de fermeture, et avec un mécanisme d'ouverture et de fermeture (100) permettant d'ouvrir et de fermer les stations de transformation,
**caractérisé en ce que**
le mécanisme de verrouillage (8) comprend une courbe de verrouillage (V) par rapport à laquelle les stations de transformation (4) se déplacent au moins en partie, ladite courbe de verrouillage (V) vue dans la direction de déplacement du support (2) s'étendant de manière continue entre une position où les parties de support de moule de soufflage sont ouvertes et une position où les parties de support de moule de soufflage (6, 7) sont fermées, et **en ce que** les parties de support de moule de soufflage (6, 7) sont automatiquement maintenues en état de fermeture au moins le long d'une autre section de la périphérie par un verrou (8) prévu contre les parties de support de moule de soufflage (6, 7).

2. Dispositif (1) selon la revendication 1,
**caractérisé en ce que**
la zone de la section est réalisée sans courbe de verrouillage.

3. Dispositif (1) selon au moins une des revendications précédentes,
**caractérisé en ce que**
ledit dispositif (1) comprend une courbe d'ouverture et de fermeture (H), notamment fixe, laquelle provoque une ouverture et une fermeture de la station de transformation et **en ce que** le mécanisme d'ouverture et de fermeture comprend un suiveur de courbe (9), lequel coopère avec la courbe d'ouverture et de fermeture (H) lors du déplacement du support (2).

4. Dispositif (1) selon au moins une des revendications précédentes,
**caractérisé en ce que**
le mécanisme de verrouillage (8) comprend un suiveur de courbe (5), lequel coopère avec la courbe de verrouillage (V) notamment fixe lors du déplacement du support (2).

5. Dispositif (1) selon au moins une des revendications précédentes,
**caractérisé en ce que**
la position du suiveur de courbe associé au mécanisme de verrouillage (8) par rapport au support (2) peut être changée par le mécanisme d'ouverture et de fermeture (100) et **en ce que** la courbe de verrouillage (V) présente un tracé de courbe, lequel, vu dans la direction de déplacement du support (2), compense après un arc de déverrouillage et un arc de verrouillage le changement de position du suiveur de courbe (5) associé au mécanisme de verrouillage (8) en fonction du mouvement d'ouverture et/ou de fermeture des parties de support de moule de soufflage (6, 7), de telle manière que ledit suiveur de courbe (5) soit constamment appliqué contre la courbe de verrouillage (V) dans cette zone.

6. Dispositif (1) selon au moins une des revendications précédentes,
**caractérisé en ce que**
la courbe d'ouverture et de fermeture (H) ainsi que la courbe de verrouillage (V) présentent des tracés de courbe qui ne s'étendent que sur un seul plan en liaison avec le trajet de déplacement de la station de transformation (4) et **en ce que** deux des plans associés aux tracés de courbe sont parallèles l'un à l'autre.

7. Dispositif (1) selon les revendications 4 à 6,
**caractérisé en ce que**
la courbe d'ouverture et de fermeture (H) et la courbe de verrouillage (V) sont alignées de telle manière que les suiveurs de courbe (5, 9) du mécanisme d'ouverture et de fermeture (100) et du mécanisme de verrouillage (8) sont déplacés chacun exclusivement en direction horizontale.

8. Dispositif (1) selon au moins une des revendications précédentes,
**caractérisé en ce que**
la courbe de verrouillage (V) comprend au moins deux segments, et est donc prévue en deux parties, et **en ce qu'**un segment s'étend préférentiellement suivant un angle circonférentiel d'au moins 10°.

9. Dispositif (1) selon l'une des revendications 1 à 4,
**caractérisé en ce que**
la courbe de verrouillage (V) est prévue en une seule partie.

10. Dispositif (1) selon au moins une des revendications précédentes,
**caractérisé en ce que**
le suiveur de courbe (5) du mécanisme de verrouillage (8) est en matière plastique et **en ce que** la courbe de verrouillage (V) est prévue non traitée thermiquement, et notamment non lubrifiée.

11. Dispositif (1) selon au moins une des revendications précédentes,
**caractérisé en ce que**
le verrou (8) comporte un accumulateur d'énergie (34), en particulier un ressort, et est constamment contraint dans une position de verrouillage par l'accumulateur d'énergie (34), et **en ce que** l'accumulateur d'énergie est contraint dans une direction de serrage par la courbe de verrouillage (V) dans la zone de déverrouillage.

12. Dispositif (1) selon au moins une des revendications précédentes,
**caractérisé en ce que**
le mécanisme de verrouillage (8) comporte un élément (31) prévu sur une partie de support de moule de soufflage (6) et un élément (37, 32) prévu sur l'autre partie de support de moule de soufflage, et **en ce que** les deux éléments (31, 32, 37) coopèrent l'un avec l'autre par correspondance de forme pour le verrouillage des supports de moule de soufflage (6, 7), un élément (32, 37) étant prévu mobile en liaison avec la partie de support de moule de soufflage (7) associée audit élément (32, 37) et un suiveur de courbe (5) étant prévu notamment directement sur ledit élément (32, 37).

13. Dispositif (1) selon la revendication 12,
**caractérisé en ce que**
l'élément mobile (32, 37) est monté de manière à pouvoir pivoter autour d'un axe (33), et **en ce que** le suiveur de courbe (5) se trouve d'un côté de l'axe (33), et l'élément partiel (32) en engagement positif de verrouillage se trouve de l'autre côté de l'axe (33).

14. Dispositif (1) selon l'une des revendications 12 ou 13,
**caractérisé en ce qu'**
un levier à main (36) est prévu sur l'élément mobile (32, 37), au moyen duquel l'accumulateur d'énergie (34) peut être serré de manière à pouvoir annuler manuellement l'engagement positif des éléments de verrouillage (31, 32, 37) et ouvrir les parties de support de moule de soufflage (6, 7).

15. Dispositif (1) selon au moins une des revendications précédentes,
**caractérisé en ce que**
le support (2) est réalisé comme une table de machine sensiblement circulaire et tourne autour d'un axe perpendiculaire (M), les deux parties de support de moule de soufflage (6, 7) des stations de transformation (4) étant montées de manière à pouvoir pivoter autour d'un axe perpendiculaire (42) et notamment commun prévu sur la table de machine, l'élément de verrouillage mobile (32, 37) étant également monté de manière à pouvoir pivoter autour d'un axe perpendiculaire (33), et l'axe de verrouillage (33) étant plus distant de l'axe (M) de table de machine en état de verrouillage des parties de support de moule de soufflage (6, 7), que l'axe (42) ou les axes des deux parties de support de moule de soufflage (6, 7).

16. Procédé de transformation de préformes en matière plastique (3a) en récipients en matière plastique (3b), dans lequel les préformes en matière plastique (3a) sont convoyées par des stations de transformation (4) le long d'un chemin de transport défini et transformées en récipients en matière plastique (3b) pendant ledit transport, et dans lequel les stations de transformation (4) présentent des parties de support de moule de soufflage (6, 7) mobiles l'une par rapport à l'autre au moyen d'un mécanisme d'ouverture et de fermeture (100) pour fermer les stations de transformation (4), et dans lequel les parties de support de moule de soufflage (6, 7) sont maintenues automatiquement l'une contre l'autre par un mécanisme de verrouillage (8) au moins temporairement pendant le processus de transformation,
**caractérisé en ce qu'**
un suiveur de courbe (5) du mécanisme de verrouillage (8) est constamment appliqué contre une courbe de verrouillage (V) qui lui est associée, de peu après le début d'une ouverture à peu avant la fin d'une fermeture des parties de support de moule de soufflage (6, 7).
